# EUROPEAN PATENT APPLICATION

(11) **EP 4 611 233 A1**
(43) Date of publication of application: **03.09.2025**
(21) Application number: 24223718.8
(22) Date of filing: 30.12.2024
(51) Int. Cl.: H02K 7/18, H02K 33/16, H02K 35/02

(54) **MOTOR MODULE, ELECTRONIC DEVICE, AND CONTROL METHOD AND APPARATUS FOR MOTOR MODULE**

(30) Priority: 28.02.2024 CN 202410224567
(71) Applicant: Beijing Xiaomi Mobile Software Co., Ltd., Beijing 100085 (CN)
(72) Inventor: ZHANG, Bin, Beijing, 100085 (CN); FAN, Jie, Beijing, 100085 (CN); LI, Ming, Beijing, 100085 (CN); WANG, Zhongshuai, Beijing, 100085 (CN); WU, Minghou, Beijing, 100085 (CN)
(74) Representative: Dehns Germany Partnerschaft mbB

(57) **Abstract**

The present disclosure relates to a motor module (100), an electronic device, a control method and apparatus for a motor module (100). The motor module (100) includes a housing (101), at least one coil surrounding the housing (101), and a magnetic object (103) disposed in the housing (101). The motor module (100) is provided with a motor state and a non-motor state; in the motor state, the coil drives, by using a magnetic field generated based on a current input from a power supply module (303), the magnetic object (103) to move within the housing (101); and in the non-motor state, the magnetic object (103) moves within the housing (101), thereby generating a charging current on the coil, where the charging current is used for charging the power supply module (303).

## Description

### TECHNICAL FIELD

The present disclosure relates to the field of terminal power supplying technologies, and specifically relates to a motor module, an electronic device, and a control method and apparatus for a motor module.

### BACKGROUND

In recent years, terminal devices such as smartphones, tablet computers and wearable devices have become increasingly rich and superior in performance, which makes energy consumption of the terminal devices increasingly high.

### SUMMARY

In order to overcome problems in the related arts, embodiments of the present disclosure provide a motor module, an electronic device, and a control method and apparatus for a motor module to solve defects in the related arts.

According to a first aspect of the embodiments of the present disclosure, there is provided a motor module. The motor module includes:
a housing;
a coil, surrounding the housing; and
a magnetic object, disposed in the housing; where
the motor module is provided with a motor state and a non-motor state; in the motor state, the coil drives, by using a magnetic field generated based on a current input from a power supply module, the magnetic object to move within the housing; and in the non-motor state, the magnetic object moves within the housing, thereby generating a charging current on the coil, where the charging current is used for charging the power supply module.

In an embodiment of the present disclosure, the motor module includes a plurality of coils surrounding the housing; the plurality of coils are spirally wound on a surface of the housing in sequence; and the plurality of coils are connected in parallel with each other.

In an embodiment of the present disclosure, at least one of two ends of the housing is provided with an elastomer, the magnetic object moves between the two ends of the housing, and the elastomer is configured to provide, when contacted by the magnetic object, a reverse acting force to the magnetic object.

In an embodiment of the present disclosure, the coil extends along an axial direction of the housing, and the axial direction of the housing is a direction of a connecting line between the two ends of the housing.

In an embodiment of the present disclosure, the motor module further includes a current-conduction module, where the current-conduction module is connected to the coil and the power supply module respectively, and configured to transmit the charging current generated on the coil to the power supply module, thereby charging the power supply module.

According to a second aspect of the embodiments of the present disclosure, there is provided an electronic device. The electronic device includes:
the motor module according to any embodiment of the first aspect;
a switching unit, connected to the motor module;
a charging circuit, connected to the switching unit, and configured to transmit the charging current generated by the motor module to the power supply module;
a motor driving circuit, connected to the switching unit, and configured to drive the motor module to generate motion and enter the motor state; and
a control chip, connected to the switching unit, and configured to control the switching unit to connect the motor module to the charging circuit or the motor driving circuit.

In an embodiment of the present disclosure, the charging circuit includes a rectifier module, an energy collecting module and the power supply module connected in sequence, where the rectifier module is connected to the switching unit, and the energy collecting module is connected to the control chip;
the rectifier module is configured to convert an alternating current generated by the motor module into a direct current; and
the energy collecting module is configured to input the direct current output from the rectifier module into the power supply module.

In an embodiment of the present disclosure, the motor driving circuit includes a motor driving module and a motor power supplying module connected to the motor driving module, where the motor driving module is connected to the switching unit, the motor power supplying module is connected to the power supply module, and the control chip is connected to the motor driving module and the motor power supplying module respectively;
the motor driving module is configured to drive, according to a control instruction of the control chip, the motor module to generate the motion and enter the motor state; and
the motor power supplying module is configured to supply power to the motor driving module by transmitting electrical energy of the power supply module to the motor driving module.

In an embodiment of the present disclosure, the electronic device further includes a power supply management module and an external charging interface connected in sequence, where the power supply management module is connected to the power supply module, and the control chip is connected to the power supply management module;
the power supply management module is configured to control the power supply module to supply power to the control chip, and control an external power supply connected to the external charging interface to charge the power supply module.

In an embodiment of the present disclosure, the motor power supplying module is connected to the power supply module via the power supply management module; and
the power supply management module is configured to control the power supply module to supply power to the motor power supplying module.

According to a third aspect of the embodiments of the present disclosure, there is provided a control method for a motor module in an electronic device. The electronic device includes: the motor module according to any embodiment of the first aspect; a switching unit, connected to the motor module; a charging circuit, connected to the switching unit, and configured to transmit the charging current generated by the motor module to the power supply module; a motor driving circuit, connected to the switching unit, and configured to drive the motor module to generate motion and enter the motor state; and a control chip, connected to the switching unit, and configured to control the switching unit to connect the motor module to the charging circuit or the motor driving circuit; and the method includes:
in response to receiving a motor motion instruction, controlling the switching unit to connect the motor module to the motor driving circuit, and controlling the motor driving circuit to drive the motor module to generate the motion and enter the motor state; and
when the motor module is not in the motor state, controlling the switching unit to connect the motor module to the charging circuit, and controlling the charging circuit to transmit the charging current generated by the motor module to the power supply module.

In an embodiment of the present disclosure, the electronic device further includes a power supply management module and an external charging interface connected in sequence, where the power supply management module is connected to the power supply module, and the power supply management module is configured to control an external power supply connected to the external charging interface to charge the power supply module; and
the method further includes:
controlling, in response to the external charging interface charging the power supply module, the switching unit not to connect the motor module to the charging circuit.

According to a fourth aspect of the embodiments of the present disclosure, there is provided a control apparatus for a motor module in an electronic device. The electronic device includes: the motor module according to any embodiment of the first aspect; a switching unit, connected to the motor module; a charging circuit, connected to the switching unit, and configured to transmit the charging current generated by the motor module to the power supply module; a motor driving circuit, connected to the switching unit, and configured to drive the motor module to generate motion and enter the motor state; and a control chip, connected to the switching unit, and configured to control the switching unit to connect the motor module to the charging circuit or the motor driving circuit; and the apparatus includes:
a motor state module, configured to, in response to receiving a motor motion instruction, control the switching unit to connect the motor module to the motor driving circuit, and control the motor driving circuit to drive the motor module to generate the motion and enter the motor state; and
a non-motor state module, configured to, when the motor module is not in the motor state, control the switching unit to connect the motor module to the charging circuit, and control the charging circuit to transmit the charging current generated by the motor module to the power supply module.

In an embodiment of the present disclosure, the electronic device further includes a power supply management module and an external charging interface connected in sequence, where the power supply management module is connected to the power supply module, and the power supply management module is configured to control an external power supply connected to the external charging interface to charge the power supply module; and
the non-motor state module is further configured to:
control, in response to the external charging interface charging the power supply module, the switching unit not to connect the motor module to the charging circuit.

According to a fifth aspect of the embodiments of the present disclosure, there is provided a computer program product. The computer program product includes a computer program/instruction, where the computer program/instruction, when executed by a processor, implements steps of the method according to any embodiment of the third aspect.

According to a sixth aspect of the embodiments of the present disclosure, there is provided an electronic apparatus. The electronic apparatus includes a memory and a processor, where the memory is configured to store a computer instruction runnable on the processor, and the processor, when executing the computer instruction, is configured to implement the control method for the motor module according to any embodiment of the third aspect.

According to a seventh aspect of the embodiments of the present disclosure, there is provided a computer readable storage medium. The computer readable storage medium stores a computer program, where the program, when executed by a processor, implements the method according to any embodiment of the third aspect.

The technical solution provided by the embodiments of the present disclosure may include the following beneficial effects.

The motor module provided by the embodiments of the present disclosure can achieve integration of an electricity generation function and a motor function by providing the housing, the coil surrounding the housing, and the magnetic object disposed in the housing. That is to say, in the motor state, the motor module can make the coil to drive, by using the magnetic field generated by the coil based on the current input from the electronic device, the magnetic object to move within the housing, which makes the magnetic object to hit the housing, thereby achieving a vibration of the motor; and in the non-motor state, the magnetic object, after loss of the driving force, can move relative to the coil by following movement of the device where the motor module is located, which achieves that the coil cuts magnetic induction lines of the magnetic object, thereby generating the charging current in the coil to charge the device. Therefore, the motor module can be integrated in an original motor module in the device, and realize the electricity generation function without increasing space occupation, which can improve an endurance capability of the device without reducing the performance of the device.

### BRIEF DESCRIPTION OF THE DRAWINGS

The accompanying drawings herein, which are incorporated into and form a part of the specification, illustrate embodiments in accordance with the present invention, and are used in conjunction with the specification to explain the principles of the present invention.
FIG. 1 is a schematic diagram of a structure of a motor module illustrated in an exemplary embodiment of the present disclosure.
FIG. 2 is a schematic diagram of a structure of an electronic device illustrated in an exemplary embodiment of the present disclosure.
FIG. 3 is an operation flowchart of an electronic device illustrated in an exemplary embodiment of the present disclosure.
FIG. 4 is a flowchart of a control method for a motor module illustrated in an exemplary embodiment of the present disclosure.
FIG. 5 is a schematic diagram of a structure of a control apparatus for a motor module illustrated in an exemplary embodiment of the present disclosure.
FIG. 6 is a structural block diagram of a terminal device illustrated in an exemplary embodiment of the present disclosure.

### DETAILED DESCRIPTION

Exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the present disclosure. On the contrary, they are only examples of devices and methods consistent with some aspects of the present disclosure as detailed in the appended claims.

The terms used in the present disclosure are used solely for the purpose of describing particular embodiments, and are not intended to limit the present disclosure. The singular forms of "a", "said" and "the" used in the present disclosure and the appended claims are also intended to include the majority form, unless the context clearly indicates other meanings. It should also be understood that the term "and/or" as used in this article refers to and includes any or all possible combinations of one or more of the associated listed items.

It should be understood that although the terms first, second, and third, etc. may be used in the present disclosure to describe various types of information, such information should not be limited to these terms. These terms are only used for distinguishing the same type of information from one another. For example, without departing from the scope of the present disclosure, the first information may also be referred to as the second information, and similarly, the second information may also be referred to as the first information. Depending on the context, the phrase "if' as used herein may be interpreted as "at the time of......", "when ......", or "in response to determining".

In recent years, terminal devices such as smartphones, tablet computers and wearable devices have become increasingly rich and superior in performance, which makes energy consumption of the terminal devices increasingly high. In related arts, a terminal device often extends its endurance time by reducing the performance of the terminal device, for example, by starting a power saving mode to extend the endurance time. However, reducing the performance of the terminal device will affect usage experience of a user, and even affect the user's normal usage of the terminal device.

Based on this, the present disclosure provides a motor module, an electronic device, and a control method and apparatus for a motor module.

In a first aspect, at least one embodiment of the present disclosure provides a motor module that is integrated in an original motor module of the terminal device, and the motor module may generate electrical energy during motion with the terminal device, thereby supplying the electrical energy to the terminal device, which provides the terminal device with a motion charging function, and thus improves an endurance capability of the terminal device without reducing the performance of the terminal device.

Preferably, the motor module may be applied in a wearable device.

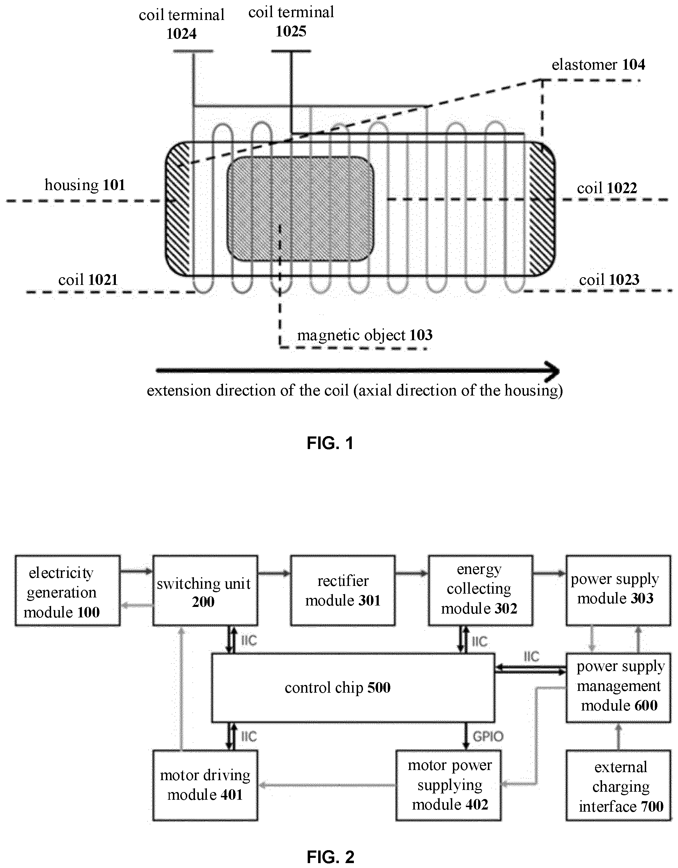

Please refer to FIG. 1, which exemplarily shows a schematic diagram of a structure of a motor module. Next, the structure of the motor module provided in the present disclosure is described in detail in conjunction with the accompanying drawings.

The motor module includes a housing 101, a coil surrounding the housing 101, and a magnetic object 103 disposed in the housing 101. The motor module is provided with a motor state and a non-motor state. In the motor state, the coil drives, by using a magnetic field generated based on a current input from a power supply module (i.e., a power supply module in a device where the motor module is located, such as a battery), the magnetic object 103 to move within the housing 101; and in the non-motor state, the magnetic object 103 moves within the housing 101, thereby generating a charging current on the coil, where the charging current is used for charging the power supply module.

The present disclosure does not limit the shape of the housing 101, for example, the housing 101 may be in the shape of a column as illustrated in FIG. 1, or other shapes. The housing 101 may be made of a non-conductive material, such as plastic.

In some embodiments, the coil surrounding the housing 101 may be one or more. Preferably, the motor module includes a plurality of coils surrounding the housing 101, the plurality of coils are spirally wound on a surface of the housing in sequence, and the plurality of coils are connected in parallel with each other. For example, coil 1021, coil 1022 and coil 1023 are shown in FIG. 1, the three coils described above are connected in parallel between coil terminal 1024 and coil terminal 1025 respectively. The parallel connection of the plurality of coils can generate a large electric potential when electricity is generated, and can reduce coil loss, thereby providing a conversion rate of kinetic energy to electrical energy.

In some embodiments, the magnetic object 103 may be selected from magnets with superior permeability, magnetic energy product, and coercivity performance, such as N50H magnets.

In some embodiments, the terminal device where the motor module is located may be provided with one power supply module; in the motor state, the power supply module inputs a current to the coil; and in the non-motor state, the charging current generated by the coil charges the power supply module. Alternatively, the terminal device where the motor module is located may be provided with two power supply modules, where a first power supply module is a conventional power supply module responsible for normal charging and discharging functions, e.g., charging this power supply module by using a charger, and inputting a current to the coil by this power supply module. A second power supply module is configured to be charged by the charging current generated by the coil, and the electrical energy charged in this power supply module may be used for supplying power to a load in the device, or charging the first power supply module.

Exemplarily, at least one of two ends of the housing 101 may be provided with an elastomer 104, such as a spring. The elastomer is configured to provide, when contacted by the magnetic object, a reverse acting force to the magnetic object. The magnetic object 103, when moving between the two ends of the housing 101, may generate a larger vibration by hitting the spring, thereby increasing vibration amplitude of the motor; and the magnetic object 103 may also generate a reverse motion by hitting the spring, which enables the magnetic object 103 to move back and forth, and increases continuity of the motion, thereby improving the effect when electricity is generated and motor vibration is performed respectively.

Preferably, with reference to the extension direction of the coil, the axial direction of the housing in FIG. 1, the coil may extend along the axial direction of the housing 101, i.e. the axial direction of the coil coincides with the axial direction of the housing. The axial direction of the housing is a direction of a connecting line between the two ends of the housing, i.e., the magnetic object 103 may move between the two ends of the housing 101, i.e., along the axial direction. Therefore, stroke of motion of the magnetic object 103 can be increased, and stroke of relative motion between the magnetic object 103 and the coil can be increased, which increases efficiency of electricity generation and amplitude of motor vibration.

Further exemplarily, the motor module may further include a current-conduction module (not shown in the figures), where the current-conduction module is connected to the coil and the power supply module respectively, and configured to transmit the charging current generated on the coil to the power supply module, thereby charging the power supply module. For example, the current-conduction module may be a circuit structure such as a wire, and capable of collecting, transmitting, etc., the charging current. The current-conduction module can facilitate collection and transmission of the charging current, thereby improving the charging efficiency.

The motor module provided by the embodiments of the present disclosure can achieve integration of a electricity generation function and a motor function by providing the housing 101, the coil surrounding the housing 101, and the magnetic object 103 disposed in the housing 101. That is to say, in the motor state, the motor module can make the coil to drive, by using the magnetic field generated by the coil based on the current input from the electronic device, the magnetic object 103 to move within the housing 101, which makes the magnetic object to hit the housing 101, thereby achieving a vibration of the motor, and the vibration effect is particularly better when springs are provided at the two ends of the housing 101; and in the non-motor state, the magnetic object 103, after loss of the driving force, can move relative to the coil by following movement of the terminal device where the motor module is located, which achieves that the coil cuts magnetic induction lines of the magnetic object 103, thereby generating electrical energy in the coil and outputting. Therefore, the motor module can be integrated in an original motor module in the device, and realize the electricity generation function without increasing space occupation, which can improve an endurance capability of the device without reducing the performance of the device.

In a second aspect, at least one embodiment of the present disclosure provides an electronic device capable of controlling a module that integrates an electricity generation function and a motor function (e.g., the motor module 100 provided in the embodiments of the first aspect, etc.), and realizing management of the motor function and the electricity generation function of the above-described module, thereby enabling the two functions to co-ordinate and cooperate with each other.

Preferably, the electronic device may be a wearable device such as a smart bracelet and a smart watch. When the user wears the smart watch, bracelet, etc. for continuous movement, kinetic energy may be collected and charge the device; and when the device has prompts, pressure/touch feedback, and other scenarios that require the motor to work, such as message notification, touch feedback, etc., the collection of the kinetic energy may be terminated, and the motor module may be actively made to be in the motor state and vibrate. Therefore, two functions, i.e., the motor vibration function and the motion charging function are integrated without increasing space occupation.

Please refer to FIG. 2, which exemplarily shows a schematic diagram of a structure of an electronic device. Next, the structure of the electronic device provided in the present disclosure is described in detail in conjunction with the accompanying drawings.

The device includes the motor module 100 provided in any of the embodiments of the first aspect, a switching unit 200 connected to the motor module 100, a charging circuit connected to the switching unit 200, a motor driving circuit connected to the switching unit 200, and a control chip 500 connected to the switching unit 200. The charging circuit is configured to transmit the charging current generated by the motor module 100 to the power supply module 303. The motor driving circuit is configured to drive the motor module 100 to generate motion and enter the motor state. The control chip 500 is configured to control the switching unit 200 to connect the motor module 100 to the charging circuit or the motor driving circuit.

In some embodiments, the switching unit 200 may be a switching module with a communication function, such as a semiconductor switch. The switching unit 200 may switch, according to a control signal of the control chip 500, branch circuits to which the motor module 100 is connected, i.e., the switching unit 200 connects the motor module 100 to the charging circuit or the motor driving circuit, thereby making the motor module 100 to be in the non-motor state or the motor state. The switching unit 200, when connecting one of the charging circuit and the motor driving circuit to the motor module 100, may also isolate the other one of the charging circuit and the motor driving circuit from the motor module 100 for anti-reverse protection. For example, a control end of the switching unit 200 conducts the motor module 100 and the charging circuit when at a high level, and conducts the motor module 100 and the motor driving circuit when at a low level, then the control chip 500 may control the state of the motor module 100 by adjusting the level of the pin connected to the control end of the switching unit 200.

In some embodiments, the charging circuit may include a rectifier module 301, an energy collecting module 302 and the power supply module 303 connected in sequence, where the rectifier module 301 is connected to the switching unit 200, and the energy collecting module 302 is connected to the control chip 500. The rectifier module is configured to convert an alternating current generated by the motor module into a direct current; for example, the rectifier module 301 may be a low dropout rectifier module 301, whose internal switching tube may be selected from low-impedance devices to control the circuit impedance, control the voltage difference between the input end and the output end to be less than 600m V, and minimize the loss on the charging circuit. The energy collecting module is configured to input the direct current output from the rectifier module into the power supply module; for example, the energy collecting module 302 may be a tiny energy collecting module 302, which has a small input voltage low limit and a wide input voltage range. Due to the irregular motion of the magnetic object 103 with the terminal device, the voltage output by the electricity generation module 100 is unstable. Therefore, the input voltage characteristic of the tiny energy collecting module 302 may be adapted to the motion scenario of the magnetic object 103. In addition, the energy collecting module 302 may be selected from devices such as low-impedance switching tubes to ensure the conversion efficiency of kinetic energy to electrical energy.

In some embodiments, the motor driving circuit includes a motor driving module 401 and a motor power supplying module 402 connected to the motor driving module 401, where the motor driving module 401 is connected to the switching unit 200, the motor power supplying module 402 is connected to the power supply module 303, and the control chip 500 is connected to the motor driving module 401 and the motor power supplying module 402 respectively. The motor driving module is configured to drive, according to a control instruction of the control chip, the motor module to generate the motion and enter the motor state; for example, the motor driving module 401 is a linear motor driving module 401, which may output, according to the control signals of the control chip 500, pulse width modulation (PWM) signals of different frequencies and duty cycles, thereby controlling the electricity generation module 100 to vibrate in the motor state. The motor power supplying module 402 is configured to supply power to the motor driving module 401 by transmitting electrical energy of the power supply module to the motor driving module 401; for example, the motor power supplying module 402 may be a low power consumption BUCK circuit, which is capable of supplying the direct current to the motor driving module 401. For example, the device is further provided with a power supply management module 600, and the motor power supplying module 402 is connected to the power supply module 303 via the power supply management module 600; in other words, the power supply management module 600 controls power supplying of the power supply module 303 to the motor driving circuit, and specifically, the power supply module supplies power to the motor driving module 401 via the motor power supplying module 402.

With continued reference to FIG. 2, the device further includes a power supply management module 600 and an external charging interface 700 connected with each other, where the power supply management module 600 is connected to the power supply module 303, and the control chip 500 is connected to the power supply management module 600. The external charging interface 700 may be connected to an external charger and charge the power supply module 303 via the power supply management module 600. The power supply management module 600 is configured to control the power supply module 303 to supply power to the control chip 500, and control an external power supply connected to the external charging interface 700 to charge the power supply module 303. The power supply management module 600 may be controlled by the control chip 500, and provided with a path management capability. When the external charging interface 700 is connected to a charger, the power supply module 303 may be charged via the power supply management module 600; and when the external charging interface 700 is not connected to a charger, power may be supplied via the power supply management module 600 to a load such as the motor driving module 401.

The electronic device provided by the embodiments of the present disclosure may provide a conventional charging path, a motor vibrating path, and a motion charging path. The conventional charging path is a path including the external charging interface 700, the power supply management module 600, and the power supply module 303. The motor vibrating path is a path including the power supply module 303, the power supply management module 600, the motor power supplying module 402, the motor driving module 401, the switching unit 200, and the motor module 100. The motion charging path is a path including the motor module 100, the switching unit 200, the rectifier module 301, the energy collecting module 302, and the power supply module 303.

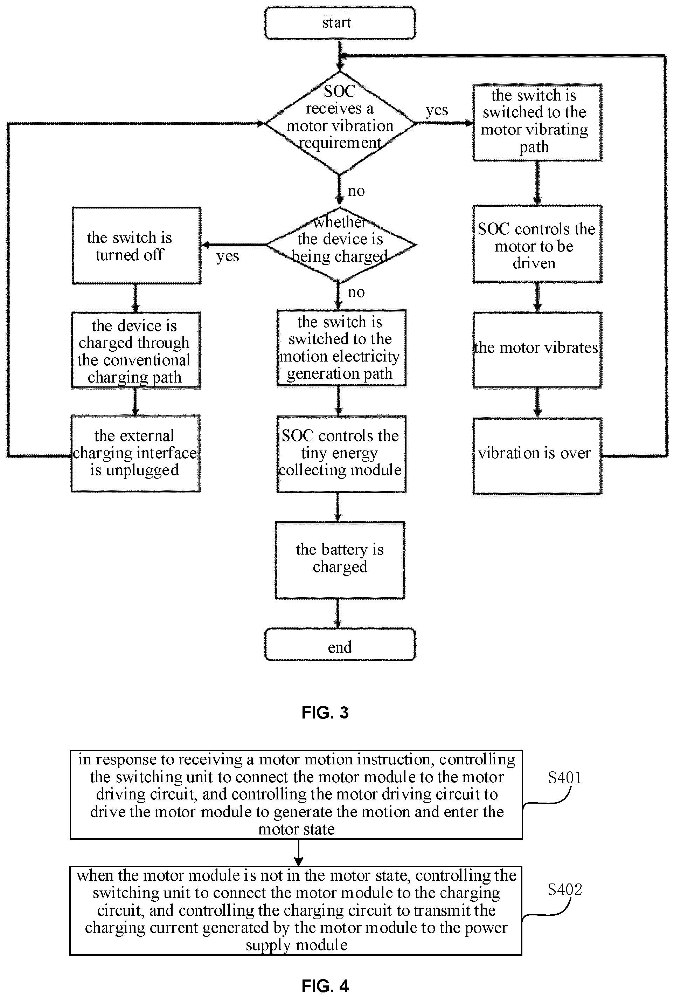

Please refer to FIG. 3, which illustrates a workflow of the electronic device provided by the present disclosure.

Firstly, whether the control chip SOC (system on chip) receives a motor vibration requirement is determined, if the SOC receives the motor vibration requirement, the switch is switched to the motor vibrating path, and the SOC controls the motor driving module to drive the motor (i.e., the electricity generation module in the motor state) to move, and then the motor vibrates. If the SOC does not receive the motor vibration requirement, the SOC determines whether the device is being charged, and if the device is being charged, the SOC controls the switch to be turned off, and controls the device to be charged through the conventional charging path until the charger is unplugged from the external charging interface. If the device is not being charged, the SOC controls the switch to be switched to the electricity generation path, and then the SOC controls the tiny energy collecting module to charge the power supply module.

In a third aspect, at least one embodiment of the present disclosure provides a control method for a motor module in an electronic device, the electronic device may include: the motor module according to any one of the embodiments of the first aspect; a switching unit, connected to the motor module; a charging circuit, connected to the switching unit, and configured to transmit the charging current generated by the motor module to the power supply module; a motor driving circuit, connected to the switching unit, and configured to drive the motor module to generate motion and enter the motor state; a control chip, connected to the switching unit, and configured to control the switching unit to connect the motor module to the charging circuit or the motor driving circuit.

Please refer to FIG. 4, which exemplarily illustrates the flow of the method. The method includes steps S401 to S402.

At step S401, in response to receiving a motor motion instruction, the switching unit is controlled to connect the motor module to the motor driving circuit, and the motor driving circuit is controlled to drive the motor module to generate the motion and enter the motor state.

In some embodiments, the receipt of the motor motion instruction indicates that the electronic device has a motor vibration requirement, for example, if a motor vibration is required by an upper layer application, then a motor motion instruction is generated and sent to the control chip. It should be understood that the motor motion instruction is provided with contents such as the vibration frequency, number of times, time, etc., and this step controls the motor to complete the vibration according to the above contents.

At step S402, when the motor module is not in the motor state, the switching unit is controlled to connect the motor module to the charging circuit, and the charging circuit is controlled to transmit the charging current generated by the motor module to the power supply module.

The motor module being not in the motor state indicates that the electronic device does not currently have a vibration requirement.

Furthermore, the electronic device further includes a power supply management module and an external charging interface connected in sequence, where the power supply management module is connected to the power supply module, and the power supply management module is configured to control an external power supply connected to the external charging interface to charge the power supply module. Based on this, the method may also control, in response to the external charging interface charging the power supply module, the switching unit not to connect the motor module to the charging circuit. That is, motion charging is not performed by using the motor module when the electronic device is being charged by using the external charging interface; the motion charging is performed by using the motor module only when the electronic device is not being charged by using the external charging interface.

Further details of the steps of the method have been described in more detail in the introduction of the motor module and the electronic device in the first and second aspects, and will not be repeated here.

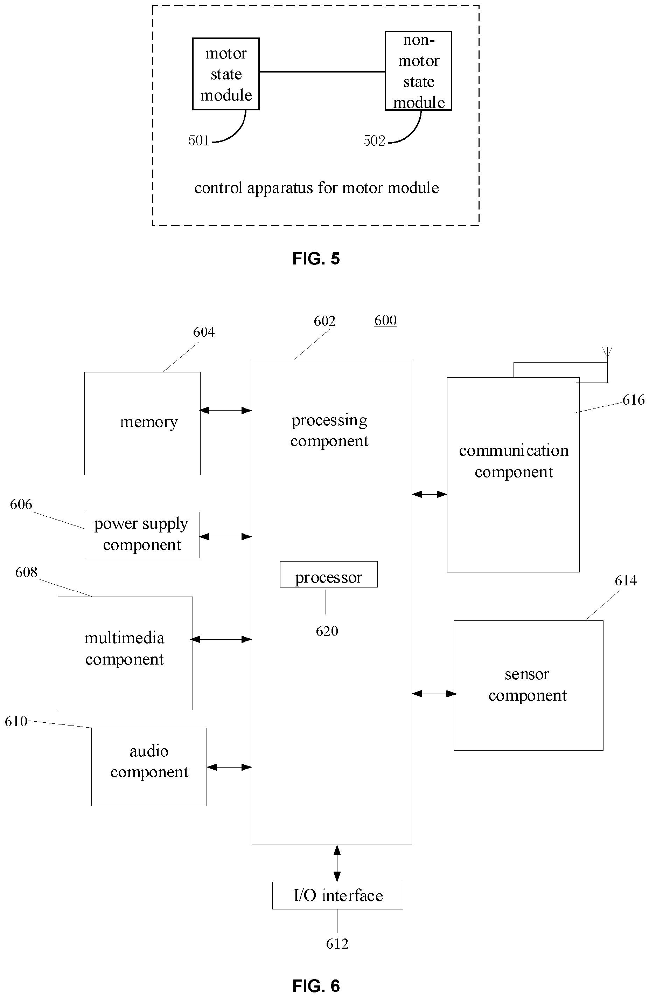

In a fourth aspect, at least one embodiment of the present disclosure provides a control apparatus for a motor module in an electronic device, the electronic device may include: the motor module according to any one of the embodiments of the first aspect; a switching unit, connected to the motor module; a charging circuit, connected to the switching unit, and configured to transmit the charging current generated by the motor module to the power supply module; a motor driving circuit, connected to the switching unit, and configured to drive the motor module to generate motion and enter the motor state; a control chip, connected to the switching unit, and configured to control the switching unit to connect the motor module to the charging circuit or the motor driving circuit. Referring to FIG. 5, the apparatus includes:
a motor state module 501, configured to, in response to receiving a motor motion instruction, control the switching unit to connect the motor module to the motor driving circuit, and control the motor driving circuit to drive the motor module to generate the motion and enter the motor state; and
a non-motor state module 502, configured to, when the motor module is not in the motor state, control the switching unit to connect the motor module to the charging circuit, and control the charging circuit to transmit the charging current generated by the motor module to the power supply module.

In an embodiment of the present disclosure, the electronic device further includes a power supply management module and an external charging interface connected in sequence, where the power supply management module is connected to the power supply module, and the power supply management module is configured to control an external power supply connected to the external charging interface to charge the power supply module; and
the non-motor state module is further configured to:
control, in response to the external charging interface charging the power supply module, the switching unit not to connect the motor module to the charging circuit.

According to a fifth aspect of the embodiments of the present disclosure, there is provided a computer program product. The computer program product includes a computer program/instruction, where the computer program/instruction, when executed by a processor, implements steps of the method according to any embodiment of the third aspect.

According to a sixth aspect of the embodiments of the present disclosure, there is provided an electronic apparatus. The electronic apparatus includes a memory and a processor, where the memory is configured to store a computer instruction runnable on the processor, and the processor, when executing the computer instruction, is configured to implement the control method for the motor module according to the third aspect.

Please refer to FIG. 6, which exemplarily illustrates a block diagram of the terminal device described above. For example, the device 600 may be a cell phone, a computer, a digital broadcast terminal, a message transceiver device, a game console, a tablet device, a medical device, a fitness device, or a personal digital assistant.

Referring to FIG. 6, the device 600 may include one or more of the following components: a processing component 602, a memory 604, a power supply component 606, a multimedia component 608, an audio component 610, an input/output (I/O) interface 612, a sensor component 614, and a communication component 616.

The processing component 602 generally controls overall operation of the device 600, such as operations associated with display, telephone calls, data communication, camera operations, and recording operations. The processing component 602 may include one or more processors 620 to execute an instruction, thereby completing all or some of the steps of the methods described above. In addition, the processing component 602 may include one or more modules that facilitate interaction between the processing component 602 and other components. For example, the processing component 602 may include a multimedia module to facilitate interaction between the multimedia component 608 and the processing component 602.

The memory 604 is configured to store various types of data to support operations at the device 600. Examples of such data include the following for any application program or method operated on the device 600: instructions, contact data, phonebook data, messages, pictures, videos, etc. The memory 604 may be implemented by any type of volatile or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 606 supplies power to various components of the device 600. The power supply component 606 may include a power supply management system, one or more power supplies, and other components associated with generating, managing and distributing power for the device 600.

The multimedia component 608 includes a screen that provides an output interface between the device 600 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 608 includes a front-facing camera and/or a rear-facing camera. The front-facing camera and/or the rear-facing camera may receive external multimedia data when the device 600 is in an operating mode, such as a shooting mode or a video mode. Each of the front-facing camera and the rear-facing camera may be a fixed optical lens system or have a focal length and optical zoom capability.

The audio component 610 is configured to output and/or input audio signals. For example, the audio component 610 includes a microphone (MIC), configured to receive external audio signals when the device 600 is in an operating mode, such as a calling mode, a recording mode and a voice recognition mode. The received audio signals may be further stored in the memory 604 or sent via the communication component 616. In some embodiments, the audio component 610 further includes a speaker for outputting the audio signals.

The I/O interface 612 provides an interface between the processing component 602 and a peripheral interface module, and the peripheral interface module may be a keypad, a click wheel, a button, etc. These buttons may include, but be not limited to, a home button, a volume button, a start button, and a lock button.

The sensor component 614 includes one or more sensors configured to provide status assessment of various aspects of the device 600. For example, the sensor component 614 may detect an open/closed state of the device 600, relative positioning of the components, for example, the components are the display and small keypad of the device 600; the sensor component 614 may also detect a change in the position of the device 600 or a change in the position of one component of the device 600, the presence or absence of user contact with the device 600, the orientation or acceleration/deceleration of the device 600, and temperature changes of the device 600. The sensor component 614 may include a proximity sensor that is configured to detect the presence of nearby objects in the absence of any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate the communication between the device 600 and other devices by wired or wireless means. The device 600 may access a wireless network based on a communication standard, such as WiFi, 2G, 3G, 4G, 5G, or a combination thereof. In an exemplary embodiment, the communication component 616 receives broadcast signals or broadcast-related information from an external broadcast management system via a broadcast channel. In an exemplary embodiment, the communication component 616 further includes a near-field communication (NFC) module to facilitate short-range communication. For example, the NFC module may be implemented based on the radio frequency identification (RFID) technology, infrared data association (IrDA) technology, ultra-wideband (UWB) technology, Bluetooth (BT) technology, and the like.

In an exemplary embodiment, the device 600 may be implemented by one or more of an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the above control process of the electronic device.

In a seventh aspect, in an exemplary embodiment of the present disclosure, a non-transitory computer-readable storage medium including an instruction is also provided, such as the memory 604 including an instruction. The instruction described above is capable of being executed by the processor 620 of the device 600 to complete the above control method for the motor module. For example, the non-transitory computer-readable storage medium may be an ROM, a random access memory (RAM), a CD-ROM, a magnetic tape, a floppy disk, or an optical data storage verification device.

After considering the specification and practicing the disclosure disclosed herein, those skilled in the art will easily come up with other implementation solutions of the present disclosure. The present disclosure is intended to cover any variations, uses or adaptive changes of the present disclosure, and the variations, uses or adaptive changes follow the general principles of the present disclosure and include common knowledge or commonly used technical means in the art that are not disclosed in the present disclosure. The specification and embodiments are only considered to be exemplary, and the true scope of the are indicated by the following claims.

## Claims

1. A motor module (100), **characterized in that** the motor module (100) comprises:
a housing (101);
at least one coil, surrounding the housing (101); and
a magnetic object (103), disposed in the housing (101); wherein
the motor module (100) is provided with a motor state and a non-motor state; wherein in the motor state, the coil drives, by using a magnetic field generated based on a current input from a power supply module (303), the magnetic object (103) to move within the housing (101); and in the non-motor state, the magnetic object (103) moves within the housing (101), thereby generating a charging current on the coil, wherein the charging current is used for charging the power supply module (303).

2. The motor module (100) according to claim 1, wherein the at least one coil comprises a plurality of coils surrounding the housing (101); the plurality of coils are spirally wound on a surface of the housing (101) in sequence; and the plurality of coils are connected in parallel with each other.

3. The motor module (100) according to claim 1 or 2, wherein at least one of two ends of the housing (101) is provided with an elastomer (104), the magnetic object (103) moves between the two ends of the housing (101), and the elastomer (104) is configured to provide, when contacted by the magnetic object (103), a reverse acting force to the magnetic object (103).

4. The motor module (100) according to claim 3, wherein the coil extends along an axial direction of the housing (101), and the axial direction of the housing (101) is a direction of a connecting line between the two ends of the housing (101).

5. The motor module (100) according to any one of claims 1 to 4, further comprising a current-conduction module, wherein the current-conduction module is connected to the coil and the power supply module (303) respectively, and configured to transmit the charging current generated on the coil to the power supply module (303), thereby charging the power supply module (303).

6. An electronic device, **characterized in that** the electronic device comprises:
a motor module (100) according to any one of claims 1 to 5;
a switching unit (200), connected to the motor module (100);
a charging circuit, connected to the switching unit (200), and configured to transmit the charging current generated by the motor module (100) to the power supply module (303);
a motor driving circuit, connected to the switching unit (200), and configured to drive the motor module (100) to generate motion and enter the motor state; and
a control chip (500), connected to the switching unit (200), and configured to control the switching unit (200) to connect the motor module (100) to the charging circuit or the motor driving circuit.

7. The electronic device according to claim 6, wherein the charging circuit comprises a rectifier module (301), an energy collecting module (302) and the power supply module (303) connected in sequence, the rectifier module (301) is connected to the switching unit (200), and the energy collecting module (302) is connected to the control chip (500);
the rectifier module (301) is configured to convert an alternating current generated by the motor module (100) into a direct current; and
the energy collecting module (302) is configured to input the direct current output from the rectifier module (301) into the power supply module (303).

8. The electronic device according to claim 6 or 7, wherein the motor driving circuit comprises a motor driving module (401) and a motor power supplying module (402) connected to the motor driving module (401), the motor driving module (401) is connected to the switching unit (200), the motor power supplying module (402) is connected to the power supply module (303), and the control chip (500) is connected to the motor driving module (401) and the motor power supplying module (402) respectively;
the motor driving module (401) is configured to drive, according to a control instruction of the control chip (500), the motor module (100) to generate the motion and enter the motor state; and
the motor power supplying module (402) is configured to supply power to the motor driving module (401) by transmitting electrical energy of the power supply module (303) to the motor driving module (401).

9. The electronic device according to claim 8, further comprising a power supply management module (600) and an external charging interface (700) connected with each other, wherein
the power supply management module (600) is connected to the power supply module (303), and the control chip (500) is connected to the power supply management module (600); and
the power supply management module (600) is configured to control the power supply module (303) to supply power to the control chip (500), and control an external power supply connected to the external charging interface (700) to charge the power supply module (303).

10. The electronic device according to claim 9, wherein the motor power supplying module (402) is connected to the power supply module (303) via the power supply management module (600); and
the power supply management module (600) is configured to control the power supply module (303) to supply power to the motor power supplying module (402).

11. A control method for a motor module (100) in an electronic device, **characterized in that** the electronic device comprises:
the motor module (100) according to any one of claims 1 to 5;
a switching unit (200), connected to the motor module (100);
a charging circuit, connected to the switching unit (200), and configured to transmit the charging current generated by the motor module (100) to the power supply module (303);
a motor driving circuit, connected to the switching unit (200), and configured to drive the motor module (100) to generate motion and enter the motor state; and
a control chip (500), connected to the switching unit (200), and configured to control the switching unit (200) to connect the motor module (100) to the charging circuit or the motor driving circuit; and
the method comprises:
in response to receiving a motor motion instruction, controlling (S401) the switching unit (200) to connect the motor module (100) to the motor driving circuit, and controlling (S401) the motor driving circuit to drive the motor module (100) to generate the motion and enter the motor state; and
in response to determining that the motor module (100) is not in the motor state, controlling (S402) the switching unit (200) to connect the motor module (100) to the charging circuit, and controlling (S402) the charging circuit to transmit the charging current generated by the motor module (100) to the power supply module (303).

12. The control method for the motor module (100) according to claim 11, wherein the electronic device further comprises a power supply management module (600) and an external charging interface (700) connected with each other, and the power supply management module (600) is connected to the power supply module (303), and configured to control an external power supply connected to the external charging interface (700) to charge the power supply module (303); and
the method further comprises:
controlling, in response to determining that the external charging interface (700) charges the power supply module (303), the switching unit (200) not to connect the motor module (100) to the charging circuit.

13. A computer program product, comprising a computer program or an instruction, **characterized in that** the computer program or the instruction, when executed by a processor, causes the processor to perform the control method for the motor module (100) according to claim 11 or 12.

14. An electronic apparatus, **characterized in that** the electronic apparatus comprises a memory and a processor, wherein the memory is configured to store a computer instruction runnable on the processor, and the processor, through executing the computer instruction, is configured to perform the control method for the motor module (100) according to claim 11 or 12.

15. A non-transitory computer readable storage medium, storing a computer program, **characterized in that** the computer program, when executed by a processor, causes the processor to perform the control method for the motor module (100) according to claim 11 or 12.
